# EUROPEAN PATENT APPLICATION

(11) **EP 4 749 966 A1**
(43) Date of publication of application: **27.05.2026**
(21) Application number: 24853404.2
(22) Date of filing: 03.07.2024
(51) Int. Cl.: H04L 5/00, H04W 72/231

(54) **RESOURCE INDICATION METHOD, DEVICE, AND STORAGE MEDIUM**

(30) Priority: 11.08.2023 CN 202311017812
(71) Applicant: ZTE CORPORATION, Shenzhen, Guangdong 518057 (CN)
(72) Inventor: CHEN, Jie, Shenzhen, Guangdong 518057 (CN); LU, Youxiong, Shenzhen, Guangdong 518057 (CN); XING, Weimin, Shenzhen, Guangdong 518057 (CN); MIAO, Ting, Shenzhen, Guangdong 518057 (CN); HE, Haigang, Shenzhen, Guangdong 518057 (CN); BI, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/103244
(87) International publication number: WO 2025/035989

(57) **Abstract**

The present application provides a resource indication method, a device, and a storage medium. The method is applied to at least one first communication device in a first communication device set, and comprises: receiving resource indication information sent by a second communication device; and performing data transmission by means of time-frequency resources determined by the resource indication information.

## Description

### CROSS REFERENCE TO RELATED APPLICATIONS

This application claims priority to Chinese Patent Application No. 202311017812.2 filed on August 11, 2023, entitled "Resource Indication Method, Device and Storage Medium", the entirety of which is incorporated herein by reference.

### TECHNICAL FIELD

The present application relates to the technical field of communications, and in particular to a resource indication method, device and storage medium.

### BACKGROUD

In the communication process using sidelink mode 1, the scheduling node can schedule time-frequency resources that indicate or configure data transmission to the transmitting terminal in a sidelink, such that the transmitting terminal in the sidelink can transmit data in the sidelink according to authorization information, but the sidelink receiver usually does not have corresponding authorization information. Therefore, the sidelink receiver usually continuously blindly detects sidelink data on the sidelink, which results in significant time and energy consumption. In addition, since the sidelink receiver does not acquire authorization information of the transmitting terminal in the sidelink in advance, issues such as half-duplex or resource conflict may arise, and this can prevent the receiver from effectively receiving sidelink data transmitted by the transmitting terminal, thereby reducing communication efficiency.

### SUMMARY

The embodiments of the present application propose a resource indication method, a device, and a storage medium.

The embodiments of the present application propose a resource indication method, applied to at least one first communication device in a first communication device set, including: receiving resource indication information sent by a second communication device; and performing data transmission by time-frequency resources determined by the resource indication information.

The embodiments of the present application propose a resource indication method, applied to a second communication device, including: sending resource indication information to at least one first communication device in a first communication device set, such that the first communication device performs data transmission by time-frequency resources determined by the resource indication information.

The embodiments of the present application propose a communication device, including: a memory, and one or more processors; the memory is configured to store one or more programs; the one or more programs, when executed by the one or more processors, cause the one or more processors to implement the method according to any one of the above embodiments.

The embodiments of the present application further provide a storage medium, having a computer program stored thereon, and the computer program, when executed by a processor, implements the method according to any one of the above embodiments.

### BRIEF DESCRIPTION OF THE DRAWINGS

FIG. 1 is a schematic diagram of sidelink communication interaction provided by the prior art;
FIG. 2 is a flow chart of a resource indication method provided in an embodiment of the present application;
FIG. 3 is a flow chart of another resource indication method provided in an embodiment of the present application;
FIG. 4 is a configuration schematic diagram of a sidelink communication system provided in an embodiment of the present application;
FIG. 5 is a schematic diagram illustrating the implementation of logical channel multiplexing provided in an embodiment of the present application;
FIG. 6 is a structural block diagram of a resource indication device provided in an embodiment of the present application;
FIG. 7 is a structural block diagram of another resource indication device provided in an embodiment of the present application; and
FIG. 8 is a structural schematic diagram of a communication device provided in an embodiment of the present application.

### DETAILED DESCRIPTION

The embodiments of the present application will be illustrated below in conjunction with the accompanying drawings. The present application is described below in conjunction with the drawings of embodiments, the examples provided are intended merely to explain the present application and are not used to limit the scope of the present application.

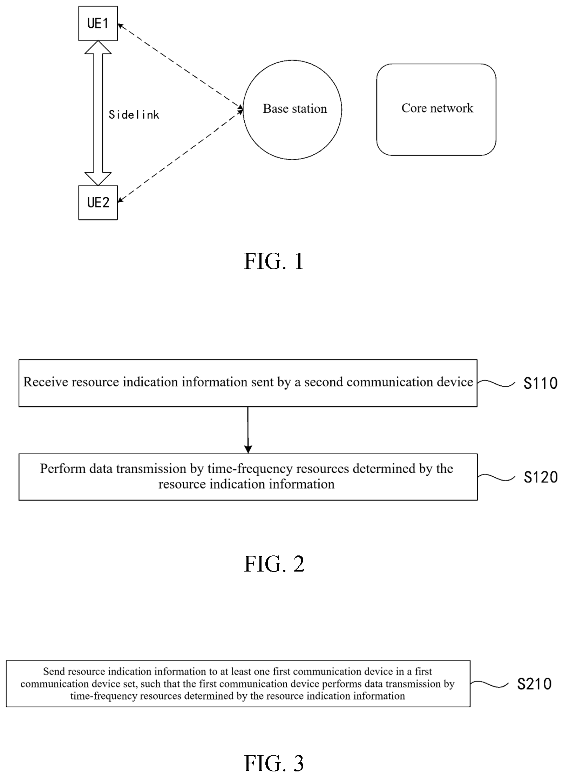

With the development of wireless communication technology and the increasing demand for communication from users, in order to meet the communication needs of low latency, high reliability and high speed, the fifth generation mobile communication technology (5th Generation, 5G) has become the trend of future network development. In a sidelink communication system, when there is service to be transmitted between user equipment (UE), the service data between UEs does not pass through the network side, that is, it is not forwarded via the cellular link between the UE and the base station, instead, is directly transmitted from the data source UE to the target UE via the sidelink. FIG. 1 is a schematic diagram of sidelink communication interaction provided by the prior art, as shown in FIG. 1, UE1 and UE2 communicate directly without the cellular link forwarding process of the base station. This technology can reduce the burden on cellular networks, decrease the battery power consumption of user equipment, and improve the robustness of network infrastructure, it effectively meets the requirements of high-data-rate service and proximity service, it also supports direct communication in scenarios without network coverage, which can meet special communication needs such as public safety.

The time-frequency resources in sidelink communication are often indicated or configured by the base station to the transmitting UE by downlink control information (DCI) signaling or radio resource control (RRC) signaling within the coverage. Furthermore, the transmitting UE performs data transmission on a sidelink resource pool according to authorization information, and the receiving UE blindly detects and receives data in the sidelink resource pool, which results in significant time and energy consumption. In addition, since the sidelink receiving UE does not acquire authorization information of the transmitting UE in the sidelink in advance, issues such as half-duplex problem or resource conflict may arise, and this can prevent the receiving UE from effectively receiving sidelink data transmitted by the transmitting UE, thereby reducing communication efficiency.

In view of this, an embodiment of the present application provides a resource indication method, which enables a base station to simultaneously indicate scheduled resources to both a transmitting UE and a receiving UE, this ensures that the receiving UE can effectively receive data transmitted by the transmitting UE, thereby improving communication efficiency.

It should be noted that the first communication device in embodiments of the present application may also be referred to as a first communication node, and the second communication device may also be referred to as a second communication node.

In one embodiment, FIG. 2 is a flow chart of a resource indication method provided in an embodiment of the present application. This embodiment is applied to scenarios where communication resources are indicated simultaneously to a plurality of first communication devices. This embodiment may be performed by at least one first communication device in a first communication device set. The first communication device set may include at least one first communication device serving as a transmitter, may also include at least one first communication device serving as a receiver, and may also include at least one first communication device serving as a transmitter and at least one first communication device serving as a receiver. As shown in FIG. 2, this embodiment includes steps S110 and S120.

S110: resource indication information sent by a second communication device is received.

S120: data transmission is performed by time-frequency resources determined by the resource indication information.

The second communication device may simultaneously send resource indication information to one or more first communication devices in the first communication device set, such that each first communication device in the first communication device set associated with the resources indicated by the resource indication information sends or receives data on corresponding time-frequency resources.

**In** one embodiment, data transmission is performed by time-frequency resources determined by the resource indication information includes:
a first communication device serving as a transmitter and a first communication device serving as a receiver in the first communication device set associated with the resources indicated by the resource indication information are determined based on the resource indication information;
the first communication device serving as a transmitter transmits data on the determined time-frequency resources; and
the first communication device serving as a receiver receives data on the determined time-frequency resources.

The first communication device set may include one or more first communication devices, and each first communication device plays a different role in the data transmission process, and each first communication device may serve as either a transmitter or a receiver. After a first communication device in the first communication device set receives resource indication information sent by a second communication device, the role of each first communication device itself in the data transmission process is determined based on the resource indication information. If it serves as a transmitter, the first communication device transmits data on the determined time-frequency resources; if it serves as a receiver, the first communication device receives data on the determined time-frequency resources.

In one embodiment, the resource indication information includes at least one of the following: physical layer dynamic indication information, semi-static indication information, or higher layer indication information. In the embodiment, the second communication device may dynamically indicate the resource indication information to the first communication device by the physical layer dynamic indication information, or may semi-statically indicate the resource indication information to the first communication device by a combination of semi-static indication information and physical layer dynamic indication information, or may directly configure the resource indication information to the first communication device by higher level indication information.

In one embodiment, upon the condition that the resource indication information includes physical layer dynamic indication information, the resource indication method applied to at least one first communication device in the first communication device set further includes: at least one group radio network temporary identity (RNTI) allocated by the second communication device is received; and the group RNTI is used to scramble the resource indication information. After each first communication device accesses the network, the second communication device allocates at least one group-RNTI to each first communication device, and each group-RNTI corresponds to a group of first communication devices. Upon the condition that the second communication device dynamically indicates the resource indication information to the first communication device, it can also be understood that upon the condition that the second communication device sends the physical layer dynamic indication information to the first communication device, the resource indication information is scrambled by using the group-RNTI, such that the resource indication information can only be identified by the first communication device set corresponding to the group-RNTI.

In one embodiment, upon the condition that the resource indication information includes physical layer dynamic indication information, the resource indication method applied to at least one first communication device in the first communication device set further includes: the first communication device serving as a transmitter sends a resource request to the second communication device that carries at least a device identifier of the first communication device serving as a receiver. Upon the condition that the second communication device dynamically indicates the resource indication information, the first communication device serving as a transmitter sends a resource request to the second communication device, and the resource request carries a device identifier of the first communication device serving as a receiver. There may be one, or at least two first communication devices serving as a receiver. The receiver identifier of the first communication device serving as a receiver includes one of the following: a unicast destination identifier, a broadcast destination identifier, a groupcast destination identifier, a unicast link-establishment destination identifier, or a second terminal source identifier. The second terminal is the source identifier of the first communication device serving as a receiver.

In one embodiment, upon the condition that the resource indication information includes physical layer dynamic indication information, the resource indication method applied to at least one first communication device in the first communication device set further includes: in the physical layer dynamic indication information transmitted by the second communication device, a position of an indication information field related to the first communication device within the physical layer dynamic indication information is received. Upon the condition that the second communication device sends a transmitter identifier list to the first communication device by the physical layer dynamic indication information, the first communication device serving as a transmitter determines its position in the transmitter identifier list by relevant indication information field, so as to extract its own resource indication information; alternatively, upon the condition that the second communication device sends a receiver identifier list to the first communication device by the physical layer dynamic indication information, the first communication device serving as a receiver determines its position in the receiver identifier list by relevant indication information field, so as to extract its own resource indication information; alternatively, upon the condition that the second communication device sends a transmitter-receiver identifier pair list to the first communication device by the physical layer dynamic indication information, the first communication device serving as a receiver or a transmitter determines its position in the transmitter-receiver identifier pair list by relevant indication information field, so as to extract its own resource indication information.

In one embodiment, upon the condition that the resource indication information includes physical layer dynamic indication information, the resource indication information includes one of the following: group downlink control information (DCI), and broadcast DCI. Upon the condition that the resource indication information is group-DCI, the group-DCI sent by the second communication device to the first communication device can only be identified by a single group of first communication devices. Upon the condition that the resource indication information is broadcast DCI, the broadcast DCI sent by the second communication device to the first communication device can be identified by all first communication devices within the cell, and the resource indication information may be scrambled by using broadcast RNTI. In one example, the second communication device may configure at least one broadcast RNTI for each first communication device.

In one example, upon the condition that the resource indication information includes at least physical layer dynamic indication information, the resource indication information carries at least one of the following: a transmitter identifier, a receiver identifier, a transmitter-receiver identifier pair, a transmitter identifier list, a receiver identifier list, or a transmitter-receiver identifier pair list. In one example, the transmitter identifier list may include a plurality of transmitter identifiers, that is, the second communication device may simultaneously schedule a plurality of first communication devices serving as a transmitter by physical layer dynamic indication information. In one example, the receiver identifier list may include a plurality of receiver identifiers, that is, the second communication device may perform resource scheduling and data reception to a plurality of first communication devices serving as a receiver by physical layer dynamic indication information. In one example, the transmitter-receiver identifier pair may include a device identifier of a first communication device serving as a transmitter and a device identifier of a first communication device serving as a receiver, that is, the second communication device may indicate, by physical layer dynamic indication information, the same time-frequency resources for sidelink communication to both the first communication device serving as a transmitter and the first communication device serving as a receiver. In one example, the transmitter-receiver identifier pair list may include a plurality of transmitter-receiver identifier pairs, and each transmitter-receiver identifier pair includes a device identifier of a first communication device serving as a transmitter and a device identifier of a first communication device serving as a receiver.

**In** one embodiment, upon the condition that the resource indication information carries a transmitter identifier or a transmitter identifier list and the resource indication information is group-DCI, all other first communication devices in the same group that are not indicated by an identifier are all receivers. Upon the condition that the second communication device dynamically indicates to the first communication device that the resource indication information is group-DCI, the resource indication information can only be identified by a single group of first communication devices, and there is a group-RNTI for the group of first communication devices. The transmitter identifier or a transmitter identifier list is indicated in the resource indication information, wherein the transmitter identifier may be an identifier unique to a first communication device, and other first communication devices in the group that are not identified may all be considered as receivers.

In one embodiment, upon the condition that the resource indication information comprises higher layer dynamic indication information, a bearer signaling of the resource indication information includes one of the following: higher layer unicast signaling, higher layer broadcast signaling, or higher layer groupcast signaling. In one example, the higher layer unicast signaling may be RRC signaling; in one example, the higher layer broadcast signaling may be system information block (SIB) signaling.

In one embodiment, the higher layer unicast signaling, the higher layer broadcast signaling, and the higher layer groupcast signaling all include at least one of the following: a transmitter identifier, a receiver identifier or time-frequency resource information. The time-frequency resource information refers to relevant information of time-frequency resources indicated by the second communication device to one or more first communication devices. In one example, the second communication device may semi-statically configure time-frequency resources of the first communication device for sidelink communication by higher level unicast signaling. For a specific time-frequency resource, the second communication device simultaneously configures the time-frequency resource to a first communication device serving as a transmitter, and a first communication device serving as a receiver associated with the first communication device serving as a transmitter, additionally, a higher level unicast signaling includes a transmitter identifier, a receiver identifier, and time-frequency resource information. In one example, the second communication device may semi-statically schedule time-frequency resources to a plurality of first communication devices for sidelink communication by higher level groupcast signaling or unicast broadcast signaling. For a specific time-frequency resource, the second communication device simultaneously configures the time-frequency resource to a first communication device serving as a transmitter and a plurality of first communication devices serving as receivers associated with the first communication device serving as a transmitter, that is, the second communication device notifies a plurality of first communication devices serving as receivers on the sidelink of the time-frequency resource via higher level broadcast signaling or higher level groupcast signaling, and includes a transmitter identifier, a receiver identifier and time-frequency resource information in the higher level broadcast signaling or higher level groupcast signaling.

In one embodiment, the transmitter identifier includes one of the following: a first terminal source identifier, a cell radio network temporary identifier (C-RNTI), or a pre-allocated dedicated device identifier. The transmitter identifier is a unique identifier for a first communication device. For example, the transmitter identifier may be a source identifier of a first communication device serving as a transmitter (denoted as a first terminal source identifier), or a C-RNTI, or a dedicated device identifier allocated by a second communication device to a first communication device.

In one embodiment, the receiver identifier includes one of the following: a unicast destination identifier, a broadcast destination identifier, a groupcast destination identifier, a unicast link-establishment destination identifier, or a second terminal source identifier. The receiver identifier may be a unique identifier of a first communication device, such as a second terminal source identifier; alternatively, it may be a unicast destination identifier, which corresponds to unicast communication; alternatively, it may be a broadcast destination identifier, in which case the identifier is not specific to any single first communication device, in this case, all other first communication devices in the cell except the first communication device serving as a transmitter may receive resource indication information, or all first communication devices in the cell that have service associated with this broadcast destination identifier may receive resource indication information, which corresponds to broadcast communication; alternatively, it may be a groupcast destination identifier, which corresponds to a subset of first communication devices in the cell, which corresponds to groupcast communication; alternatively, it may be a unicast link-establishment destination identifier, that is, a plurality of first communication devices in the cell may receive it, but one of the communication devices serving as receivers establishes a link with a first communication device serving as a transmitter.

In one embodiment, the resource indication method applied to at least one first communication device in the first communication device set further includes: a communication service identifier that it supports is reported to the second communication device; and a receiver identifier, is received, that is determined by the second communication device based on a mapping relationship between a preset communication service identifier and a destination identifier and a communication service identifier supported by the first communication device itself. A communication service identifier is used to characterize communication device indicated by the first communication device itself. Different communication services may be configured with a corresponding communication service identifier. In one example, a corresponding receiver identifier may be allocated to a first communication device by a second communication device. The first communication device reports a communication service identifier supported by itself to the second communication device, the second communication device searches for a destination identifier corresponding to the first communication device based on a mapping relationship between a preset communication service identifier and a destination identifier, and the communication service identifier supported by the first communication device itself, and then uses the destination identifier as the corresponding receiver identifier.

In one embodiment, the resource indication method applied to at least one first communication device in the first communication device set further includes: a corresponding receiver identifier is determined based on a mapping relationship between a preset communication service identifier and a destination identifier, and a communication service identifier that it supports; and the receiver identifier is reported to the second communication device. In one example, the first communication device determines its own receiver identifier based on a preset mapping relationship between a communication service identifier and a destination identifier, as well as the communication service identifier it supports, then it reports the self-determined receiver identifier to the second communication device.

In one embodiment, when the first communication device serving as a transmitter performs logical channel multiplexing on time-frequency resources determined by the resource indication information, logical channel multiplexing and transmission of data are performed based on a destination identifier associated with the time-frequency resources. Since the second communication device simultaneously sends resource indication information to both a first communication device serving as a transmitter and a first communication device serving as a receiver in the first communication device set, when the first communication device serving as a transmitter performs logical channel multiplexing on the indicated time-frequency resources, it needs to perform logical channel multiplexing and transmission of data based on a destination identifier associated with the time-frequency resources, whereas logical channels of unassociated destination identifiers cannot be used for logical channel multiplexing and transmission on the time-frequency resources.

In one embodiment, the resource indication method applied to at least one first communication device in the first communication device set further includes: feedback indication information that carries feedback device identifier indication information or feedback device identifier sent by the second communication device is received; upon the condition that the feedback device identifier indication information is a first identifier or the feedback device identifier is a transmitter identifier, corresponding feedback information is sent, by a first communication device serving as a transmitter, to the second communication device; upon the condition that the feedback device identifier indication information is a second identifier or the feedback device identifier is a receiver identifier, corresponding feedback information is sent, by at least one first communication device serving as a receiver, to the second communication device. When the second communication device indicates the resource indication information to the first communication device, it may indicate to the first communication device a device identifier for sending feedback information of sidelink data. In one example, the device identifier for sending feedback information may be a feedback device identifier, or it may be indicated by feedback device identifier indication information. In one example, the feedback device identifier indication information may be indicated by using one bit or at least two bits. For example, upon the condition that the feedback device identifier indication information uses one bit, if it is 0, it indicates that corresponding feedback information is sent to a second communication device by a first communication device serving as a transmitter; if it is 1, it indicates that corresponding feedback information is sent to a second communication device by a first communication device serving as a receiver. In one example, upon the condition that the feedback device identifier is a device identifier of a first communication device serving as a transmitter, corresponding feedback information is sent to a second communication device by the first communication device serving as a transmitter. in one example, upon the condition that the feedback device identifier is a device identifier of a first communication device serving as a receiver, corresponding feedback information is sent to a second communication device by the first communication device serving as a receiver. In one example, corresponding feedback information may be sent to the second communication device simultaneously by at least one first communication device serving as a transmitter and at least one first communication device serving as a receiver.

In one embodiment, FIG. 3 is a flow chart of another resource indication method provided in an embodiment of the present application. This embodiment is applied to scenarios where communication resources are indicated simultaneously to a plurality of first communication devices. This embodiment may be performed by a second communication device. As shown in FIG. 3, this embodiment includes S210.

S210: resource indication information is sent to at least one first communication device in a first communication device set, such that the first communication device performs data transmission by time-frequency resources determined by the resource indication information.

In one embodiment, the resource indication information includes at least one of the following: physical layer dynamic indication information, semi-static indication information, or higher layer indication information.

In one embodiment, upon the condition that the resource indication information includes physical layer dynamic indication information, the resource indication method applied to a second communication device further includes: at least one group radio network temporary identity (RNTI) is allocated to each first communication device, such that the first communication device scrambles the resource indication information by using the group-RNTI.

In one embodiment, upon the condition that the resource indication information includes physical layer dynamic indication information, the resource indication method applied to a second communication device further includes: a resource request sent by a first communication device that carries at least a receiver identifier is received.

In one embodiment, upon the condition that the resource indication information includes physical layer dynamic indication information, the resource indication information includes one of the following: group downlink control information (DCI), or broadcast DCI.

In one example, upon the condition that the resource indication information includes at least physical layer dynamic indication information, the resource indication information carries at least one of the following: a transmitter identifier, a receiver identifier, a transmitter-receiver identifier pair, a transmitter identifier list, a receiver identifier list, or a transmitter-receiver identifier pair list.

In one embodiment, upon the condition that the resource indication information carries a transmitter identifier or a transmitter identifier list and the resource indication information is group-DCI, all other first communication devices in the same group that are not indicated by an identifier are all receivers.

In one embodiment, upon the condition that the resource indication information comprises higher layer dynamic indication information, a bearer signaling of the resource indication information includes one of the following: higher layer unicast signaling, higher layer broadcast signaling, or higher layer groupcast signaling.

In one embodiment, the higher layer unicast signaling, the higher layer broadcast signaling, and the higher layer groupcast signaling all include at least one of the following: a transmitter identifier, a receiver identifier or time-frequency resource information.

In one embodiment, the transmitter identifier includes one of the following: a first terminal source identifier, a cell radio network temporary identifier (C-RNTI), or a pre-allocated dedicated device identifier.

In one embodiment, the receiver identifier includes one of the following: a unicast destination identifier, a broadcast destination identifier, a groupcast destination identifier, a unicast link-establishment destination identifier, or a second terminal source identifier.

In one embodiment, the resource indication method applied to a second communication device further includes: a communication service identifier, is received, that is reported by the first communication device and supported by the first communication device itself; a corresponding receiver identifier, is determined, based on a communication service identifier supported by the first communication device itself and a mapping relationship between a preset communication service identifier and a destination identifier; and the receiver identifier is allocated to a corresponding first communication device.

In one embodiment, the resource indication method applied to a second communication device further includes: a receiver identifier reported by the first communication device is received.

In one embodiment, the resource indication method applied to a second communication device further includes:

feedback indication information that carries feedback device identifier indication information or feedback device identifier is sent to a first communication device.

It should be noted that, for the explanation of parameters such as resource indication information, group-RNTI, receiver identifier, transmitter identifier, communication service identifier, etc., in the resource indication method applied to a second communication device, please refer to the description of corresponding parameters in the above-mentioned resource indication method applied to a first communication device, which will not be repeated here.

In the following examples, in the scenario where a first communication device may serve as either a transmitter or a receiver of data, a first communication device serving as a transmitter is called a transmitting UE, a first communication device serving as a receiver is called a receiving UE, and a second communication device is a scheduling node (for example, a base station or a head node), a process in which a base station indicates resources to a UE is illustrated.

In one example, since a transmitting UE needs to notify a base station of the information about a receiving UE with which it expects to communicate, the base station can simultaneously indicate scheduled resources to both the transmitting UE and the receiving UE, therefore, the base station can associate a receiver identifier or a destination identifier reported by the transmitting UE with a UE in the cell. The configuration methods of a receiver identifier or a destination identifier of a UE include the following two methods:

The first configuration method: a base station allocates an ID to each connected UE, including at least one source identifier (also called source ID), at least one broadcast destination identifier (also called broadcast destination ID), at least one groupcast destination identifier (also called groupcast destination ID), and a member ID of a member in the group.

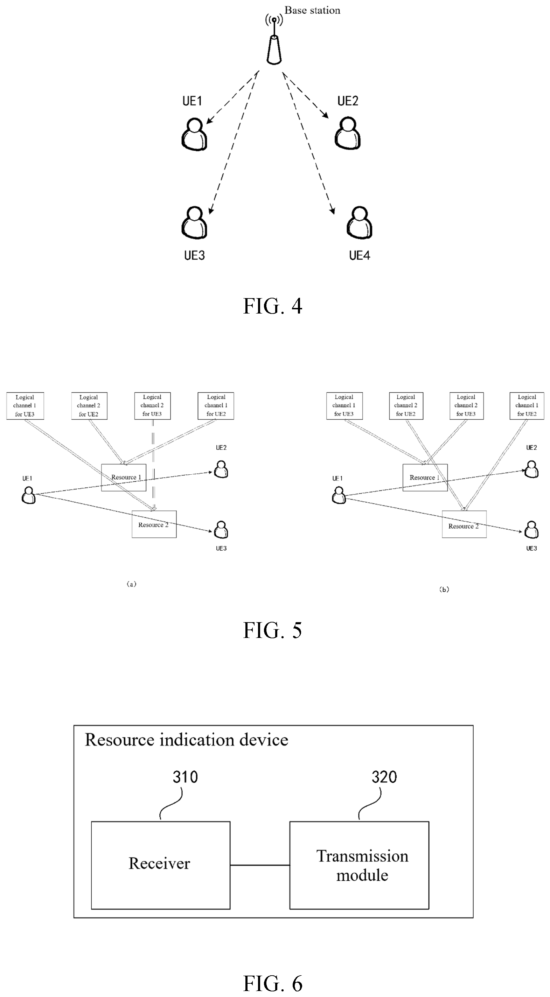

FIG. 4 is a configuration schematic diagram of a sidelink communication system provided in an embodiment of the present application. As shown in FIG. 4, 4 UEs are connected to a base station, that is, UE1, UE2, UE3 and UE4.

For SL communication, the base station allocates a source ID to each of UE1, UE2, UE3 and UE4, for example, the base station allocates source ID1 to UE1, source ID2 to UE2, source ID3 to UE3, and source ID4 to UE4;

the base station allocates a broadcast destination identifier to each of UE1, UE2, UE3 and UE4, for example, the base station allocates a broadcast destination ID1 (also referred to as broadcast destination ID1) to each of UE1, UE2, UE3 and UE4;

the base station allocates a groupcast destination identifier to each of UE1, UE3 and UE4, for example, the base station allocates a groupcast destination ID1 (also referred to as groupcast destination ID1) to each of UE1, UE2, UE3 and UE4;

In this way, both the base station and the UEs can associate each ID with the corresponding UE itself. The association relationship is as follows:
Source ID1 corresponds to UE1, Source ID2 corresponds to UE2, Source ID3 corresponds to UE3, and Source ID4 corresponds to UE4;
broadcast destination ID1 corresponds to UE1, UE2, UE3, UE4;
groupcast destination ID1 corresponds to UE1, UE3, UE4;

For example, if UE1 intends to transmit unicast information to UE4, when UE1 requests resources from the base station, UE1 simultaneously reports source ID4 of UE4, in this case, when the base station performs resource scheduling, it will indicate the same SL communication resources to both UE1 and UE4.

The second configuration method: The UE determines the UE ID by itself, or the higher layer determines the UE ID (including UE source ID, groupcast destination ID, broadcast destination ID, and member ID within a group), ensuring that source IDs do not conflict among UEs within the cell. The UE reports the determined ID to the base station, and the base station can identify the association between the UE ID and the UE.

The higher level of the UE that performs SL communication maps the communication service identifier on SL with the groupcast destination ID, broadcast destination ID, and destination ID for unicast link-establishment according to the mapping relationship between predetermined communication service identifiers (referred to as service ID) and destination identifiers. The SL communication UE determines a corresponding destination ID according to the communication service it supports, the source ID of SL UE is either preset or self-determined, the UE reports its determined source ID and destination ID to the base station.

In the sidelink communication system shown in FIG. 4, four types of services are supported on the sidelink, and the corresponding communication service identifiers are Service ID0, Service ID1, Service ID2, and Service ID3, respectively;

UE1 determines its own source ID1, UE2 determines its own source ID2, UE3 determines its own source ID3, and UE4 determines its own source ID4;

Additionally, the higher layer of the SL UE maps communication service identifiers to corresponding destination IDs as follows:
Service ID0 corresponds to broadcast destination ID1;
Service ID1 corresponds to broadcast destination ID2;
Service ID2 corresponds to broadcast destination ID3;
and Service ID3 corresponds to broadcast destination ID4.
If UE1 supports Service ID0 and Service ID1, then the destination IDs supported by UE1 are broadcast destination ID1 and broadcast destination ID2;
if UE2 supports Service ID0 and Service ID3, then the destination IDs supported by UE2 are broadcast destination ID1 and broadcast destination ID4;
if UE3 supports Service ID0 and Service ID1, then the destination IDs supported by UE3 are broadcast destination ID1 and broadcast destination ID2; and
if UE4 supports Service ID0, Service ID1, Service ID2 and Service ID3, then the destination IDs supported by UE4 are broadcast destination ID1, broadcast destination ID2, broadcast destination ID3 and broadcast destination ID4.

Furthermore, each UE reports its self-determined source ID and destination ID to a base station, this allows the base station to correlate the source ID and destination ID with the UEs accessing the cell. For example, when a base station observes a broadcast destination ID2 reported by a UE, it can determine that the UE serving as a receiver corresponding to the broadcast ID2 includes UE1, UE3 and UE4.

In one example, when a transmitting UE requests resources from a scheduling node (for example, a head node or a base station), it also reports a device identifier (also referred to as a destination ID) of a first communication device serving as a receiver; wherein the destination ID may include one of the following: a source ID of another UE, a broadcast destination ID, a groupcast destination ID, a default link-establishment destination ID, or a unicast destination ID.

In one example, the resource indication information is a group-DCI, that is, the base station dynamically indicates to the UE that the DCI is a group common DCI, which can only be identified by a single group of UEs, and the group of UEs has a group-RNTI for scrambling. After the UE accesses the network, the base station will allocate at least one group-RNTI to each UE, and each group-RNTI corresponds to a group of UEs.

The transmitter identifier (referred to as transmitting UE ID) and the receiver identifier (referred to as receiving UE ID) are indicated in the group common DCI, wherein the transmitting UE ID is a UE-specific ID, such as UE source ID, UE C-RNTI, and UE-specific device ID allocated to the UE by the base station;
the receiving UE ID may be a UE-specific ID, such as a UE source ID, in this case, it may be considered as unicast communication;
alternatively, the receiving UE ID is a broadcast destination ID, which means that the ID is not specific to a certain UE, and all other UEs in the cell may receive it, or all UEs in the cell with services associated with the broadcast ID may receive it, in this case, it may be considered as broadcast communication;
alternatively, the receiving UE ID is a groupcast ID, the groupcast ID corresponds to a part of UEs in the cell, in this case, it may be considered as groupcast communication.

UEs within the group that receive this group common DCI can determine communication resources on the SL, a transmitting UE transmits data on the communication resources and a receiving UE receives data on the communication resources.

In one example, the resource indication information is a group-DCI, that is, the dynamic indication DCI of the base station is a group common DCI, which can only be identified by a single group of UEs, and the group of UEs has a group-RNTI.

The DCI indicates a transmitter identifier (abbreviated as transmitting UE ID), wherein the transmitting UE ID is a UE-specific ID, and other UEs in the group that are not indicated by an ID may be considered as receiving UEs.

UEs within the group that receive this group common DCI can determine communication resources on the SL, a transmitting UE transmits data on the communication resources and a receiving UE receives data on the communication resources.

In one example, the resource indication information is a broadcast DCI, that is, the dynamic indication DCI of a base station is a broadcast DCI, which may be identified by all UEs in the cell and is scrambled by using a broadcast RNTI (the base station configures at least one broadcast RNTI for each UE);
the broadcast DCI indicates a transmitter ID (abbreviated as transmitting UE ID) and a receiver ID (abbreviated as receiving UE ID), wherein the transmitting UE ID is a UE-specific ID and the receiving UE ID may be a UE-specific ID, in this case, it may be considered as unicast communication;
alternatively, the receiving UE ID is a broadcast destination ID, which means that the ID is not specific to a certain UE, and all other UEs in the cell may receive it, in this case, it may be considered as broadcast communication;
alternatively, the receiving UE ID is a groupcast destination ID, the groupcast ID corresponds to a part of UEs in the cell, in this case, it may be considered as groupcast communication.

In one example, the base station semi-statically configures time-frequency resources (configured grant resource) of the SL UE via RRC unicast signaling. For a specific time-frequency resource, the RRC unicast signaling simultaneously configures the time-frequency resource to a transmitting UE and an associated receiving UE. The RRC configuration signaling includes a transmitter identifier, a receiver identifier, and time-frequency resource information, etc.

In one example, the base station notifies UEs on the sidelink about time-frequency resources via broadcast signaling SIB messages, the SIB signaling includes a transmitter identifier, a receiver identifier, and time-frequency resource information, etc.

In one example, since the communication resources indicated by the base station are simultaneously notified to both a transmitting UE and a receiving UE, when the MAC of the transmitting UE performs logical channel multiplexing on the indicated communication resources, it has to be completed based on a destination ID associated with the communication resources, logical channels of unassociated destination IDs cannot be multiplexed on the time-frequency resources.

FIG. 5 is a schematic diagram illustrating the implementation of logical channel multiplexing provided in an embodiment of the present application. As shown in (a) of FIG. 5, the destination identifier associated with resource 1 is UE2, and the destination identifier associated with resource 2 is UE3, when UE1 serving as a transmitter performs logical channel multiplexing on the indicated resource 1, the logical channel of UE2 may be multiplexed on resource 1, and when UE1 serving as a transmitter performs logical channel multiplexing on the indicated resource 2, the logical channel of UE3 may be multiplexed on resource 2, that is, figure (a) in FIG. 5 is permitted; as shown in (b) of FIG. 5, the destination identifier associated with resource 1 is UE3, and the destination identifier associated with resource 2 is UE2, when UE1 serving as a transmitter performs logical channel multiplexing on the indicated resource 1, the logical channel of UE2 cannot be multiplexed on resource 1, and when UE1 serving as a transmitter performs logical channel multiplexing on the indicated resource 2, the logical channel of UE3 cannot be multiplexed on resource 2, that is, figure (b) is wrong and is not permitted. That is, after UE1 serving as a transmitter acquires the granted resources, it needs to consider the destination ID during channel multiplexing, this differs from the legacy SL communication approach, wherein the base station indicates resources to the transmitting UE, and UE1 serving as a transmitter may send data to either UE2 or UE3 on resource 1.

In one example, when indicating scheduling information, the base station may indicate the feedback device identifier or feedback device identifier indication information of the hybrid automatic repeat request (HARQ) feedback information of the SL data. For example, the device of feedback information may be directly indicated to the base station by the feedback device identifier, for example, a transmitting UE is indicated to feedback HARQ to the base station, or a receiving UE is indicated to feedback HARQ to the base station; the receiving UE may feedback HARQ to the base station by the physical uplink control channel (PUCCH), or the receiving UE may feedback HARQ to the base station by the physical sidelink feedback channel (PSFCH).

In one embodiment, FIG. 6 is a structural block diagram of a resource indication device provided in an embodiment of the present application. This embodiment is applied to at least one first communication device in a first communication device set. As shown in FIG. 6, the resource indication device in this embodiment includes a receiver 310 and a transmission module 320.

The receiver 310 is configured to receive resource indication information sent by a second communication device.

The transmission module 320 is configured to perform data transmission by time-frequency resources determined by the resource indication information.

In one embodiment, data transmission is performed by time-frequency resources determined by the resource indication information includes:
a first communication device serving as a transmitter and a first communication device serving as a receiver in the first communication device set associated with the resources indicated by the resource indication information are determined based on the resource indication information;
the first communication device serving as a transmitter transmits data on the determined time-frequency resources; and
the first communication device serving as a receiver receives data on the determined time-frequency resources.

In one embodiment, the resource indication information includes at least one of the following: physical layer dynamic indication information, semi-static indication information, or higher layer indication information.

In one embodiment, upon the condition that the resource indication information includes physical layer dynamic indication information, the resource indication device applied to at least one first communication device in the first communication device set further includes:
a receiver, which is further configured to receive at least one group radio network temporary identifier (RNTI) allocated by the second communication device, and to scramble the resource indication information by using the group-RNTI.

In one embodiment, upon the condition that the resource indication information includes physical layer dynamic indication information, the resource indication device applied to at least one first communication device in the first communication device set further includes:
a transmitter configured to be a first communication device serving as a transmitter that sends a resource request to the second communication device that carries at least a device identifier of the first communication device serving as a receiver.

In one embodiment, upon the condition that the resource indication information includes physical layer dynamic indication information, the resource indication device applied to at least one first communication device in the first communication device set further includes:
a receiver further configured to receive, in physical layer dynamic indication information transmitted by the second communication device, a position of an indication information field related to the first communication device within the physical layer dynamic indication information.

In one embodiment, upon the condition that the resource indication information includes physical layer dynamic indication information, the resource indication information includes one of the following: group downlink control information (DCI), or broadcast DCI.

In one example, upon the condition that the resource indication information includes at least physical layer dynamic indication information, the resource indication information carries at least one of the following: a transmitter identifier, a receiver identifier, a transmitter-receiver identifier pair, a transmitter identifier list, a receiver identifier list, or a transmitter-receiver identifier pair list.

In one embodiment, upon the condition that the resource indication information carries a transmitter identifier or a transmitter identifier list and the resource indication information is group-DCI, all other first communication devices in the same group that are not indicated by an identifier are all receivers.

In one embodiment, upon the condition that the resource indication information comprises higher layer dynamic indication information, a bearer signaling of the resource indication information includes one of the following: higher layer unicast signaling, higher layer broadcast signaling, or higher layer groupcast signaling.

In one embodiment, the higher layer unicast signaling, the higher layer broadcast signaling, and the higher layer groupcast signaling all include at least one of the following: a transmitter identifier, a receiver identifier or time-frequency resource information.

In one embodiment, the transmitter identifier includes one of the following: a first terminal source identifier, a cell radio network temporary identifier (C-RNTI), or a pre-allocated dedicated device identifier.

In one embodiment, the receiver identifier includes one of the following: a unicast destination identifier, a broadcast destination identifier, a groupcast destination identifier, a unicast link-establishment destination identifier, or a second terminal source identifier.

In one embodiment, the resource indication device applied to at least one first communication device in the first communication device set further includes:
a reporting module configured to report a communication service identifier that it supports to the second communication device; and
a receiver further configured to receive a receiver identifier that is determined by the second communication device based on a mapping relationship between a preset communication service identifier and a destination identifier and a communication service identifier supported by the first communication device itself.

In one embodiment, the resource indication device applied to at least one first communication device in the first communication device set further includes:
a determination module configured to receive a receiver identifier determined based on a mapping relationship between a preset communication service identifier and a destination identifier, and a communication service identifier that it supports; and
a reporting module further configured to report the receiver identifier to the second communication device.

In one embodiment, when the first communication device serving as a transmitter performs logical channel multiplexing on time-frequency resources determined by the resource indication information, logical channel multiplexing and transmission of data are performed based on a destination identifier associated with the time-frequency resources.

In one embodiment, the resource indication device applied to at least one first communication device in the first communication device set further includes:
a receiver further configured to receive feedback indication information that carries feedback device identifier indication information or feedback device identifier sent by the second communication device;
a transmitter further configured to, upon the condition that the feedback device identifier indication information is a first identifier or the feedback device identifier is a transmitter identifier, send corresponding feedback information to the second communication device by a first communication device serving as a transmitter; and
a transmitter further configured to, upon the condition that the feedback device identifier indication information is a second identifier or the feedback device identifier is a receiver identifier, send corresponding feedback information to the second communication device by at least one first communication device serving as a receiver.

The resource indication device provided in this embodiment is configured to implement the resource indication method applied to at least one first communication device in a first communication device set in the embodiment shown in FIG. 2, the implementation principle and technical effect of the resource indication device provided in this embodiment are similar and will not be repeated here.

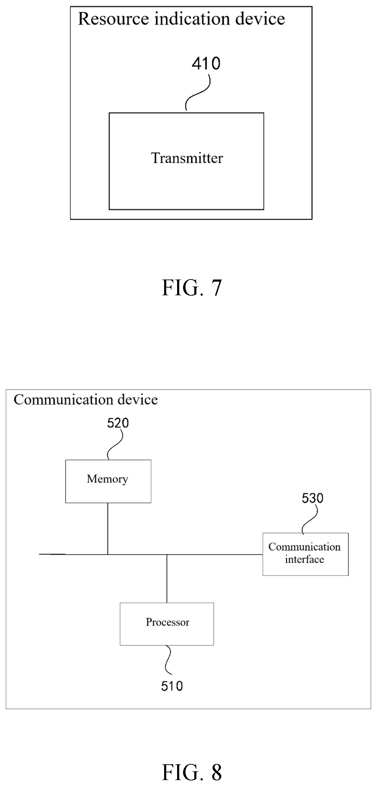

In one embodiment, FIG. 7 is a structural block diagram of another resource indication device provided in an embodiment of the present application. This embodiment is applied to a second communication device. As shown in FIG. 7, the resource indication device in this embodiment includes a transmitter 410.

The transmitter 410 is configured to send resource indication information to at least one first communication device in a first communication device set, such that the first communication device performs data transmission by time-frequency resources determined by the resource indication information.

In one embodiment, the resource indication information includes at least one of the following: physical layer dynamic indication information, semi-static indication information, or higher layer indication information.

In one embodiment, upon the condition that the resource indication information includes physical layer dynamic indication information, the resource indication device applied to a second communication device further includes:
an allocation module configured to allocate at least one group radio network temporary identifier (RNTI) to each of the first communication devices, such that the first communication device uses the group-RNTI to scramble the resource indication information.

In one embodiment, upon the condition that the resource indication information includes physical layer dynamic indication information, the resource indication device applied to a second communication device further includes:
a receiver configured to receive a resource request sent by the first communication device that carries at least a receiver identifier.

In one embodiment, upon the condition that the resource indication information includes physical layer dynamic indication information, the resource indication information includes one of the following: group downlink control information (DCI), or broadcast DCI.

In one example, upon the condition that the resource indication information includes at least physical layer dynamic indication information, the resource indication information carries at least one of the following: a transmitter identifier, a receiver identifier, a transmitter-receiver identifier pair, a transmitter identifier list, a receiver identifier list, or a transmitter-receiver identifier pair list.

In one embodiment, upon the condition that the resource indication information carries a transmitter identifier or a transmitter identifier list and the resource indication information is group-DCI, all other first communication devices in the same group that are not indicated by an identifier are all receivers.

In one embodiment, upon the condition that the resource indication information comprises higher layer dynamic indication information, a bearer signaling of the resource indication information includes one of the following: higher layer unicast signaling, higher layer broadcast signaling, or higher layer groupcast signaling.

In one embodiment, the higher layer unicast signaling, the higher layer broadcast signaling, and the higher layer groupcast signaling all include at least one of the following: a transmitter identifier, a receiver identifier or time-frequency resource information.

In one embodiment, the transmitter identifier includes one of the following: a first terminal source identifier, a cell radio network temporary identifier (C-RNTI), or a pre-allocated dedicated device identifier.

In one embodiment, the receiver identifier includes one of the following: a unicast destination identifier, a broadcast destination identifier, a groupcast destination identifier, a unicast link-establishment destination identifier, or a second terminal source identifier.

In one embodiment, the resource indication device applied to a second communication device further includes:
a receiver configured to receive a communication service identifier that is reported by the first communication device and supported by the first communication device itself;
a determination module configured to determine a corresponding receiver identifier based on a communication service identifier supported by the first communication device itself and a mapping relationship between a preset communication service identifier and a destination identifier; and allocate the receiver identifier to a corresponding first communication device.

In one embodiment, the resource indication device applied to a second communication device further includes:
a receiver further configured to receive a receiver identifier reported by the first communication device.

In one embodiment, the resource indication device applied to a second communication device further includes:
a transmitter further configured to send feedback indication information to a first communication device that carries feedback device identifier indication information or feedback device identifier.

The resource indication device provided in this embodiment is configured to implement the resource indication method applied to a second first communication device in the embodiment shown in FIG. 3, the implementation principle and technical effect of the resource indication device provided in this embodiment are similar and will not be repeated here.

In one embodiment, FIG. 8 is a schematic diagram of a communication device provided in an embodiment of the present application. As shown in FIG. 8, the device provided by the present application includes a processor 510, a memory 520, and a communication interface 530. The number of processors 510 in the device may be one or more, and FIG. 8 takes one processor 510 as an example. The number of memories 520 in the device may be one or more, and FIG. 8 takes one memory 520 as an example. The processor 510, memory 520, and communication interface 530 of the device may be connected via a bus or other means, and FIG. 8 takes connection via a bus as an example. In this embodiment, the device may be a first communication device.

The memory 520, as a computer-readable storage medium, may be configured to store software programs, computer-executable programs and modules, such as program instructions/modules corresponding to the device of any embodiment of the present application (for example, the resource indication device applied to a first communication device includes a receiver 310 and a transmission module 320). The memory 520 can include a program storage area and a data storage area, wherein the program storage area can store an operating system and an application required for at least one function; the storage data area may store data created according to the use of the device. In addition, the memory 520 can include a high-speed random access memory, and can also comprise a non-volatile memory, such as at least one disk storage device, a flash memory device or other non-volatile solid-state storage device. In some instances, the memory 520 may further include a memory remotely disposed relative to the processor 510, and these remote memories can be connected to the device via network. Examples of the above-mentioned network include, but are not limited to, the Internet, an intranet, a local area network, a mobile communication network, or combinations thereof. The communication interface 530 is used for communication interaction among a plurality of communication devices.

Upon the condition that the communication device is a first communication device, the device provided above may be configured to perform the resource indication method applied to a first communication device provided in any of the above embodiments, which has corresponding functions and effects.

Upon the condition that the communication device is a second communication device, the device provided above may be configured to perform the resource indication method applied to a second communication device provided in any of the above embodiments, which has corresponding functions and effects.

An embodiment of the present application further provides a storage medium containing computer-executable instructions, the computer-executable instructions, when executed by a computer processor, are used to execute a resource indication method applied to a first communication device, the method includes: resource indication information sent by a second communication device is received; and data transmission is performed by time-frequency resources determined by the resource indication information.

An embodiment of the present application further provides a storage medium containing computer-executable instructions, the computer-executable instructions, when executed by a computer processor, are used to execute a resource indication method applied to a second communication device, the method includes: resource indication information is sent to at least one first communication device in a first communication device set, such that the first communication device performs data transmission by time-frequency resources determined by the resource indication information.

It will be appreciated by those skilled in the art that the term user equipment covers any suitable type of wireless user equipment, such as a mobile phone, a portable data processing device, a portable web browser or a vehicle-mounted mobile station.

In general, various embodiments of the present application may be implemented in hardware or dedicated circuit, software, logic or any combination thereof. For example, some aspects may be implemented in hardware, while other aspects may be implemented in firmware or software that may be executed by a controller, microprocessor or other computing device, although the present application is not limited thereto.

Embodiments of the present application may be implemented by executing computer program instructions by a data processor of a mobile device, for example in a processor entity, or by hardware, or a combination of software and hardware. The computer program instructions may be assembly instructions, instruction set architecture (ISA) instructions, machine instructions, machine-dependent instructions, microcode, firmware instructions, state setting data, or source code or object code written in any combination of one or more programming languages.

The block diagram of any logic flow in the drawings of the present application may represent program steps, or may represent interconnected logic circuits, modules and functions, or may represent a combination of program steps and logic circuits, modules and functions. A computer program may be stored in a memory. The memory may be of any type suitable for the local technical environment and may be implemented by using any suitable data storage technology, such as but not limited to, read-only memory (ROM), random access memory (RAM), optical memory devices and systems, digital video disc (DVD) or compact disk (CD), etc. The computer-readable medium may include non-transitory storage medium. The data processor may be of any type suitable for the local technical environment, such as but not limited to, general-purpose computer, special-purpose computer, microprocessor, digital signal processor (DSP), application-specific integrated circuit (ASIC), field-programmable gate array (FGPAs) and processor based on multi-core processor architecture.

The above are merely preferred embodiments of the present application and are not intended to limit the present application. Those skilled in the art will appreciate that, various modification and alteration can be made to the present application. Any modification, equivalent replacement, improvement, etc., that is made within the spirit and principle of the present application should be included within the protection scope of the present application.

## Claims

1. A resource indication method, applied to at least one first communication device in a first communication device set, comprising:
receiving resource indication information sent by a second communication device; and
performing data transmission by time-frequency resources determined by the resource indication information.

2. The method according to claim 1, wherein performing data transmission by time-frequency resources determined by the resource indication information comprises:
determining, based on the resource indication information, a first communication device serving as a transmitter and a first communication device serving as a receiver in the first communication device set associated with the resources indicated by the resource indication information;
the first communication device serving as a transmitter transmits data on the determined time-frequency resources; and
the first communication device serving as a receiver receives data on the determined time-frequency resources.

3. The method according to claim 1, wherein the resource indication information comprises at least one of the following: physical layer dynamic indication information, semi-static indication information, or higher layer indication information.

4. The method according to claim 3, wherein upon the condition that the resource indication information comprises physical layer dynamic indication information, the method further comprises:
receiving at least one group radio network temporary identifier RNTI allocated by the second communication device; and
scrambling the resource indication information using the group-RNTI.

5. The method according to claim 3, wherein upon the condition that the resource indication information comprises physical layer dynamic indication information, the method further comprises:
the first communication device serving as a transmitter sends a resource request to the second communication device that carries at least a device identifier of the first communication device serving as a receiver.

6. The method according to claim 3, wherein upon the condition that the resource indication information comprises physical layer dynamic indication information, the method further comprises:
receiving, in physical layer dynamic indication information transmitted by the second communication device, a position of an indication information field related to the first communication device within the physical layer dynamic indication information.

7. The method according to claim 1, wherein upon the condition that the resource indication information comprises physical layer dynamic indication information, the resource indication information comprises one of the following: group downlink control information DCI, or broadcast DCI.

8. The method according to claim 1, wherein upon the condition that the resource indication information comprises at least physical layer dynamic indication information, the resource indication information carries at least one of the following: a transmitter identifier, a receiver identifier, a transmitter-receiver identifier pair, a transmitter identifier list, a receiver identifier list, or a transmitter-receiver identifier pair list.

9. The method according to claim 8, wherein upon the condition that the resource indication information carries a transmitter identifier or a transmitter identifier list and the resource indication information is group-DCI, all other first communication devices in the same group that are not indicated by an identifier are all receivers.

10. The method according to claim 3, wherein upon the condition that the resource indication information comprises higher layer dynamic indication information, a bearer signaling of the resource indication information comprises one of the following: higher layer unicast signaling, higher layer broadcast signaling, or higher layer groupcast signaling.

11. The method according to claim 10, wherein each of the higher layer unicast signaling, the higher layer broadcast signaling, or the higher layer groupcast signaling comprises at least one of the following: a transmitter identifier, a receiver identifier or time-frequency resource information.

12. The method according to claims 8, 9 or 11, wherein the transmitter identifier comprises one of the following: a first terminal source identifier, a cell radio network temporary identifier C-RNTI, or a pre-allocated dedicated device identifier.

13. The method according to claims 5, 8 or 11, wherein the receiver identifier comprises one of the following: a unicast destination identifier, a broadcast destination identifier, a groupcast destination identifier, a unicast link-establishment destination identifier, or a second terminal source identifier.

14. The method according to any one of claims 1-11, further comprising:
reporting a communication service identifier that it supports to the second communication device; and
receiving a receiver identifier determined by the second communication device based on a mapping relationship between a preset communication service identifier and a destination identifier and a communication service identifier supported by the first communication device itself.

15. The method according to any one of claims 1-11, further comprising:
determining, based on a mapping relationship between a preset communication service identifier and a destination identifier, and a communication service identifier that it supports, a corresponding receiver identifier; and
reporting the receiver identifier to the second communication device.

16. The method according to any one of claims 1-11, wherein when the first communication device serving as a transmitter performs logical channel multiplexing on time-frequency resources determined by the resource indication information, logical channel multiplexing and transmission of data are performed based on a destination identifier associated with the time-frequency resources.

17. The method according to any one of claims 1-11, wherein further comprising:
receiving feedback indication information that carries feedback device identifier indication information or feedback device identifier sent by the second communication device;
upon the condition that the feedback device identifier indication information is a first identifier or the feedback device identifier is a transmitter identifier, sending, by a first communication device serving as a transmitter, corresponding feedback information to the second communication device;
upon the condition that the feedback device identifier indication information is a second identifier or the feedback device identifier is a receiver identifier, sending, by at least one first communication device serving as a receiver, corresponding feedback information to the second communication device.

18. A resource indication method, applied to a second communication device, comprising:
sending resource indication information to at least one first communication device in a first communication device set, such that the first communication device performs data transmission by time-frequency resources determined by the resource indication information.

19. The method according to claim 18, wherein upon the condition that the resource indication information comprises physical layer dynamic indication information, the method further comprises:
allocating at least one group radio network temporary identifier RNTI to each of the first communication devices, such that the first communication device uses the group-RNTI to scramble the resource indication information.

20. The method according to claim 18, wherein upon the condition that the resource indication information comprises physical layer dynamic indication information, the method further comprises:
receiving a resource request sent by the first communication device that carries at least a receiver identifier.

21. The method according to claim 18, further comprising:
receiving a communication service identifier reported by the first communication device that is supported by the first communication device itself;
determining a corresponding receiver identifier based on a communication service identifier supported by the first communication device itself and a mapping relationship between a preset communication service identifier and a destination identifier; and
allocating the receiver identifier to a corresponding first communication device.

22. The method according to claim 18, further comprising:
receiving a receiver identifier reported by the first communication device.

23. A communication device, comprising: a memory, and one or more processors;
the memory is configured to store one or more programs;
the one or more programs, when executed by the one or more processors, cause the one or more processors to implement the method according to any one of claims 1-17 or claims 18-22.

24. A storage medium, having a computer program stored thereon, the computer program, when executed by a processor, implements the method according to any one of claims 1-17 or claims 18-22.
